# EUROPEAN PATENT APPLICATION

(11) **EP 1 936 984 A1**
(43) Date of publication of application: **25.06.2008**
(21) Application number: 06292051.7
(22) Date of filing: 22.12.2006
(51) Int. Cl.: H04N 7/173

(54) **Interactive TV system, a related meta data filtering device, a related web service routing device and a related application generating device**

(71) Applicant: Alcatel Lucent, 75008 Paris (FR)
(72) Inventor: Moons, Jan Lode Mia, 2220 Heist-op-den-Berg (BE); Lou, Zhe, 2000 Antwerp (BE)
(74) Representative: Narmon, Gisèle Marie Thérèse

(57) **Abstract**

The present invention relates to an Interactive TV system for forwarding data-stream from a head-end device to a client device. The data-stream includes metadata that is related to content of said data stream. The head end device and the client-device are coupled over a communications network. The interactive TV system comprises a Web Service routing part, that is adapted to invoke, based on the meta-data included in the data-stream, a Web-Service that corresponds to the metadata and adapted to subsequently receive a response from the Web-Service based on the metadata as an input of the web service. Furthermore, an application generating part that is adapted to generate based on the response of the web-service, an application for interacting with a user via the client device.

## Description

The present invention relates to an Interactive TV system for forwarding a data stream from a head-end device to a client device. Technical

### Background of the Invention

Such a system is already known in the art, e.g. from section 1.2 of paper "DVB- MHP/Java TV™ *Data Transport mechanisms* " from the author John Jones.

Therein, an Interactive TV system for forwarding a broadcast stream, called data-stream, from a head-end device to a client device, called set-top-box and being further referred to as STB, is disclosed. The head-end device and the STB being coupled over a broadcast channel called communications network. The applications can be delivered over the broadcast channel, together with audio and video streams. It is further disclosed herein that applications are downloaded to the set-top-box STB where the applications are Java TV™ *applications* that are built on a suite of APIs tailored specifically for the interactive TV environment. Such applications can be for example information services, games, interactive voting, e-mail, SMS or shopping. For all interactive applications an additional return channel is needed.
The main feature of an (MHP) interactive TV system is the ability to run applications that have been downloaded as part of the broadcast stream. The applications have to be defined and build upfront and inserted into the broadcast stream.

It is an object of the present invention to provide with an Interactive TV system of the above known type but wherein applications can be provided more flexibly.

According to the invention, this object is achieved by the Interactive TV system according to claim 1, the related metadata filtering device according to claim 4, the related Web Service Routing part according to claim 5, the related Application Generating device according to claim 6.

In this way, by invoking, based on the meta-data included in the data-stream, where the meta data is related to the content of the data-stream, a Web-Service corresponding to this metadata and subsequently receiving an output from the invoked Web-Service based on the metadata as an input of said web service an application for interacting with a user via said client device can be generated, based on the output of the invoked web-service. The generated application then is flexibly generated based on the metadata, included in the data-stream where the metadata characterizes the forwarded data-stream due to the fact that the meta-data is related to the content of the data stream. Hence the generated application is an application that matches with the content of the forwarded data-stream.

An additional advantage is that using this meta-information included in the data-stream and associated to the content of the data stream, there can be found dynamically available extra, information related to the ongoing broadcast.

A further characteristic feature of the present invention is described in claim 2.

By directly forwarding of the application by the application generation part the
an application processing Part (APP), adapted to process and present said application for interacting with a user of said client device (CD) at said client device (CD)

Another further characteristic feature of the present invention is described in claim 3 and claim 7.
The Interactive TV system comprises an assembling device that is adapted to insert the application generated in said data stream forwarded by said head end device.

It is to be noticed that the term 'comprising', also used in the claims, should not be interpreted s being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- FIG. 1 represents a functional structure of the Interactive television system wherein an implementation of the present invention is implemented.
- FIG. 2 represents the metadata filtering device MFD according to the present invention.
- FIG. 3 represents the web service routing device WSRD according to the present invention

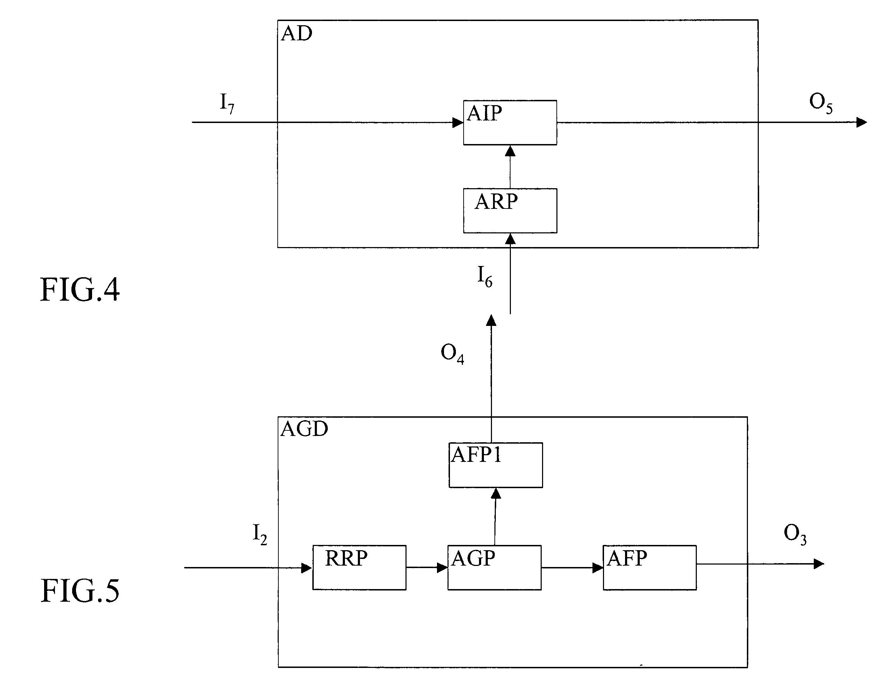

- FIG. 4 represents the assembling device AD according to the present invention
- FIG. 5 represents the application generating device AGD according to the present invention

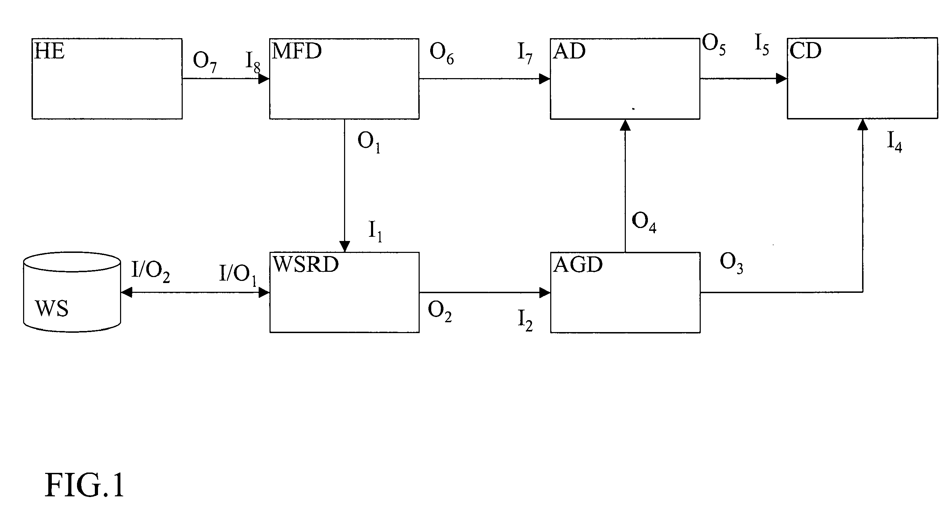

In the following paragraphs, referring to the drawing in FIG.1, an implementation of the Interactive TV system for forwarding a data stream from a head-end device HE to a client device CD.

In the first paragraph the main elements if the interactive TV system are described. In the second paragraph, all connections between mentioned elements are defined. Subsequently all relevant functional means of the mentioned system as presented in FIG.1 are described followed by a description of all interconnections. In the succeeding paragraph the actual execution of the system for media content delivery to a media destination device is described.

The interactive TV system according to our present invention comprises a head end device HE that is adapted to send data towards at least one client device CD. This head end device is an audio or video streaming server a media on demand server.

The data forwarded may be a single stream containing a media asset or be a broadcast stream being forwarded to a plurality of client devices

Although, there is in a real life network usually a plurality of such client devices, in this embodiment for reasons of simplicity only one client device is presented. Further more there is a client device that is adapted to receive the data-stream forwarded by the head end device and subsequently present the data at a screen of a television. This screen for presenting the data is not present in FIG. 1. Such a client device CD may be a set-top box at customer premises or a personal computer like a media system with an associated display and keyboard.

Further the interactive TV system comprises a metadata filtering device MFD for retrieving metadata that is related to the content of the data - stream and a Web Service Routing device WSRD, that is able to invoke a Web-Service using the metadata for selecting a matching Web Service and using this metadata as an input for this selected Web Service and further able to receive a response of said web service invoked based on the meta-data included in the data-stream.

Furthermore, the interactive TV system comprises an Application Generating device AGD that is able to generate, based on the response of the web-service, an application for interacting with a user via said client device.

A further element of the interactive TV system according to the present invention may be an assembling device AD that is able to receive an application for interacting with a user via said client device and subsequently insert the application in the data forwarded by the head end device HE to the client device CD.

The Head END device HE is coupled with an output O₇ to an input I₈ of the Meta-data filtering device MFD. In case an assembling device AD is present the Meta-data filtering device MFD further is coupled with an output O₆ to an input I₇ of the assembling device that in turn is coupled with an output O₅ to an input I₅ of the client device CD. In case no assembling device AD is present the Meta-data filtering device MFD further is coupled with an output O₆ to an input I₅ of the client device CD. The Meta-data filtering device MFD further has an output terminal O₁ that is coupled to an input terminal I₁ of the Web service Routing Device WSRD. The Web service Routing Device WSRD further is coupled with an input/output to Web services WS. The Web service Routing Device WSRD additionally has an output 02 that is coupled to an input I2 of the application-generating device AGD. The application generating device AGD is either coupled with an output 04 to an input I6 of the assembling device AD or coupled with an output 03 to an input I4 of the client device CD. Each of the connections may be Internet protocol connections, a TCP connection or an Application Programming Interface connection where the different devices are not separate boxes but separate modules and they talk to each other through the API; except for the application generating device AGD that needs a network connection to talk to the client device CD and the WSRD also needs network connections for talking to the Web Services WS.

The head-end device HE comprises a data forwarding part that is adapted to deliver data e.g. comprising media assets to the client device CD. The forwarding of data may be a broadcast stream or a media on demand asset streaming.

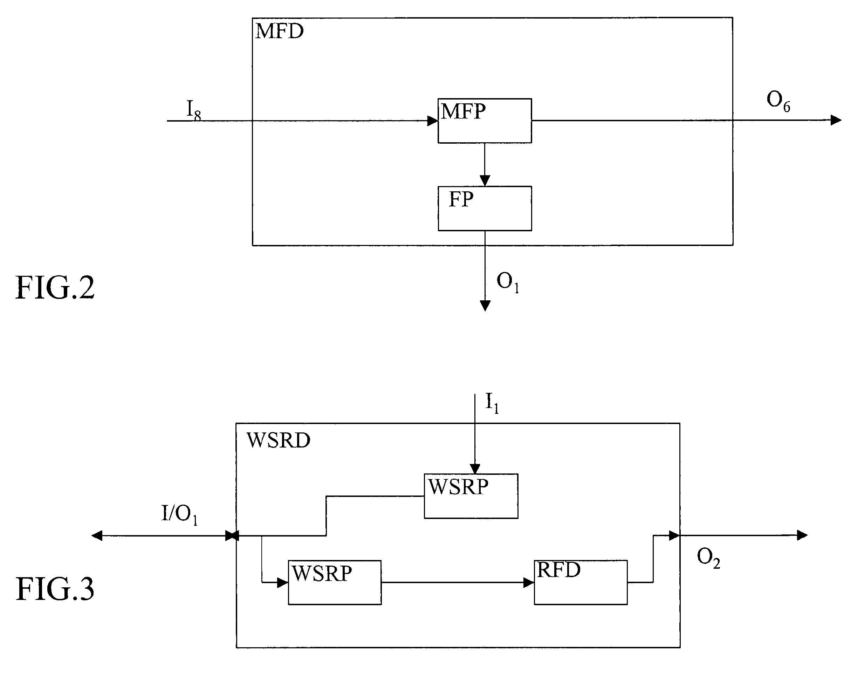

The meta-data filtering device MFD, as presented in FIG.2, comprises a metadata filtering part MFP that is able to retrieve metadata from the data -stream and a metadata forwarding part FP that is adapted to forward the metadata retrieved from the data-stream to a Web Service routing device WSRP in said interactive TV system. The Web Service routing device WSRP is adapted to invoke a web service based on said meta-data included in said data-stream.

The metadata filtering device MFD has an input terminal I₈ that is at the same time an input-terminal of the metadata filtering part MFP that also comprises a first output that is at the same time an output O₅ of the metadata filtering device MFD and a second output that is at the same time an output O₁ of the metadata filtering device MFD.

The Web Service Routing device WSRD as presented in FIG. 3 comprises a Web Service routing part, WSRP adapted to invoke a Web-Service corresponding to said metadata, based on said meta-data included in said data-stream and a web service response reception part WSRP that is able to receive a response from the web service invoked based on said meta-data included in said data-stream and a response forwarding part RFP adapted to forward the received web service response to the application generating device AGD.

The Web Service routing Device WSRD (in WSRP) comprises a Web Service Directory Part WSDP in the Web Service routing part, WSRP that lists the web services that are available for requesting information. The WSDP is populated through Web Service Description Language (WSDL) files, WSDL is an XML-based service description on how to communicate using the web service; namely, the protocol bindings and message formats required to interact with the web services listed in its directory. The supported operations and messages are described abstractly, and then bound to a concrete network protocol and message format. This means that WSDL describes the public interface to the web service. WSRP uses the metadata to match with a suitable web service described in WSDL, the metadata tags are used to match them with the web service parameters; i.e. corresponding types. E.g. if in the metadata there exists a tag called movie and in the WSDL we have a web service with a corresponding parameter this could be a match.

The web service routing part has an input terminal 11 that is at the same time an input-terminal I₁ of the Web Service routing Device WSRD. The web service response reception part WSRP is coupled with an input to the input/output of the Web Service routing Device. The web service response reception part WSRP further is coupled to the response forwarding part RFP that has an output-terminal being at the same time an output-terminal O₂ of the Web Service routing Device WSRD.

The Application Generating device AGD comprises a response reception part RRP that is adapted to receive a response generated by a web service and forwarded by the Web Service Routing device WSRD and an application generating part AGP that is in adapted to generate, based on the response of the web-service, an application for interacting with a user via said client device. The response the Application Generating Device receives is in XML format; this XML response has to be translated into a form that can be displayed by the client device. The AGD comprises an application generating part AGP that takes the XML response and uses extensible Stylesheet Language Transformations (XSLT) to change the xml format into the desired client device format (e.g. HTML, XHTML, PDF, RTF, SVG, WML, etc.).
The Application Generating device AGD may further include a presenting part PP that is adapted to forward said application for interacting with a user to the client device CD.

The Application Generating device AGD has an input terminal I₂ that is at the same time an input-terminal of the response reception part RRP that is coupled to the application generating part AGP which is coupled to the application forwarding part AFP. The application forwarding part AFP comprises an output that is at the same time an output O₃ of the Application Generating device AGD. The second application forwarding part AFP1 comprises an output that is at the same time an output O₁ of the Application Generating device AGD.

The assembling device AD includes an application reception part ARP, adapted to receive an application for interacting with a user via said client device and an application inserting part AIP that is adapted to insert the application in the data forwarded by the head end device to the client device CD.

The assembling device AD has an input terminal I₇ that is at the same time an input-terminal of the application inserting part AIP that also comprises an output that is at the same time an output O₇ of the assembling device AD and a second input that is at the same time an input I₆ of the assembling device AD.

In order to explain the execution of the present invention it is supposed that the user at client device wants to watch the movie "Da Vinci Code" via a Video on demand service. The client device then makes a request to the head end device HE for starting the steaming of the data stream now including the "Da Vinci Code". It is further assumed that the data stream also comprises meta-data characterizing the content of the video stream. It is further assumed that the meta data contains the title of the video "Da Vinci Code" the type of content, i.e. movie etc. The data stream containing the video plus meta-data is fed into a metadata filter MFD. The metadata filtering part MFP of the meta data filtering device MFD retrieves the metadata, i.e. "Da Vinci Code", and "movie", from the data-stream. The meta-data forwarding part FP, subsequently forwards the meta-data retrieved from the data-stream to a Web Service routing device forming part of the interactive TV system according to the present invention.

The Web Service Routing device WSRD receives the meta-data. Subsequently the Web Service routing part WSRP invokes a Web-Service that corresponds to the metadata. As an input the meta-data "Da Vinci Code", movie, included in the data-stream is used. With the metadata tag the Web Service Routing Part WSRP checks the Web Service Description Language WSDL files in the Web Service Routing Directory checking for a Web Service WS that could match the movie tag. E.g. Amazon, an online shop, provides a Web Service WS with parameters is the best match for this movie tag. This Web Service from Amazon will then be invoked with parameter "Da Vinci Code" for the movie type parameter; this parameter might just be a simple string but in the WSDL it is described that it could be used for retrieving movie related information.

The web service response reception part WSRP, then receives a response from said web service, i.e. the Amazon web service, in case of the example described above, that is selected using the meta-data included in the data-stream. And the corresponding response is an XML fragment describing for instance that a "Da Vinci Code" book can be bought from Amazon at a certain price. The actual layout of this response is not fixed and depends on the Web Service WS that is invoked. When a Web Service WS of a Movie Database Application is invoked it will have a totally different layout describing the product they offer.

The response forwarding part RFP forwards the received web service response, being the XML fragment it received from the invoked Web Service WS, to the application generating device AGD.

The response reception part RRP of the application generating device AGD then receives this response generated by a web service, being the XML fragment. Subsequently the application generating part AGP, being a Graphical User Interface generator, transforms through XSLT the XML response of the web-service in a suitable application for interacting with a user via said client device, if the device is a set-top-box the XML will be transformed into an application that can be invoked on this device, when the device is a mobile IPTV device it will be transformed in such a way that it is usable on this mobile IPTV device which has more constraints then a set-top-box device.

The presenting part PP of the Application Generating device AGD directly forwards the application for interacting with a user to the client device CD so that the client device is enabled to present the application at the screen corresponding to the client device in this embodiment being a set-top-box.

Alternatively the generated application may be assembled with the data stream containing the movie of the "Da Vinci Code" before being sent to the client via network. The assembly of the application with the data stream is deal t with by the Assembling device AD that receive an application for interacting with a user via said client device by means of the application reception part ARP and subsequently insert the application in the data forwarded by the head end device HE to the client device CD.

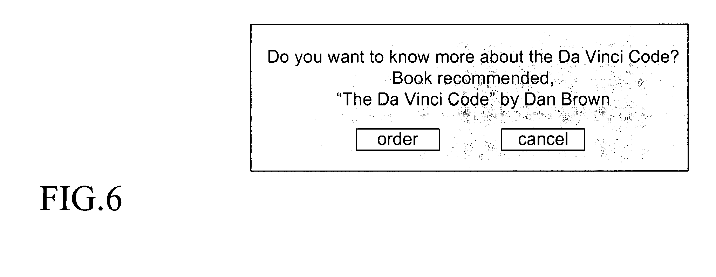

Hence the application is created by a GUI generator based on the interpreted web service, which is going to be assembled with the video stream before being sent to the client via network. When the movie is going to end, an Amazon application appears on the screen. The client clicks the application's button with a remote control corresponding to the set-top-box; a kind of information pops up in a possible format as shown in Figure 6.

The client is quite interested in this book. When the client clicks "order", an "order" message is sent to the web service router, which informs the Amazon that Jack (the client) wants to order "The Da Vinci Code". This feedback is dealt with through a feedback channel usually forming part of a interactive TV system. This feedback channel is not presented in any of the figures.

The metadata could additionally to or instead of being retrieved from the data forwarded from the head end towards the client device also be obtained through reading a tag holding meta data related to an object wherefore the user wants to retrieve additional information. The meta data included in a tag then is discovered through a client device and forwarded to said Web Service routing part WSRP.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

It is to be noted that Although the implementation is described for an interactive TV system including a set-top-box IPTV like device it could easily be reused for mobile IPTV devices as well, such as 3G phones, PDAs, etc.

## Claims

1. Interactive TV system for forwarding a data stream) from a head-end device (HE) to a client device (CD), said broadcast-stream including metadata related to content of said data stream, said head end device (HE) and said client-device (CD) being coupled over a communications network (CN), **CHARACTERISED IN THAT** said interactive TV system comprises:
a. a Web Service routing part, (WSRP) adapted to invoke, based on said meta-data included in said data, a Web-Service corresponding to said metadata and adapted to subsequently receive a response from said Web-Service based on said metadata as an input of said web service; and
b. an application generating part (AGP), adapted to generate, based on said response of said web-service, an application for interacting with a user via said client device.

2. Interactive TV system according to claim 1, **CHARACTERISED IN THAT** said interactive TV system further comprises:
c. an application forwarding Part (AFP), adapted to forward the application for interacting with a user of client device (CD) at said client device (CD) directly to said client device (CD).

3. Interactive TV system according to claim 1, **CHARACTERISED IN THAT** said Interactive TV system comprises an assembling device (AD), adapted to insert said application generated in said data stream forwarded by said head end device (HE).

4. A metadata filtering device (MFD), for use in an interactive TV system for forwarding a data stream from a head-end device (HE) to a client device (CD), said -stream) including metadata related to content of said data-stream, said head end device and said client-device being coupled over a communications network (CN), said metadata filtering device comprising:
a. a metadata filtering part (MFP), adapted to retrieve metadata from said data-stream;
b. a metadata forwarding part (FP), adapted to forward said metadata retrieved from said data-stream to a Web Service routing device (WSRP) in said interactive TV system, said Web Service routing device (WSRP) being adapted to invoke a web service based on said meta-data included in said data-stream.

5. Web Service Routing device (WSRD), for use in an interactive TV system for forwarding a data-stream from a head-end device (HE) to a client device (CD), said data stream including metadata related to content of said data-stream, said head end device and said client-device being coupled over a communications network (CN), said Web Service Routing device (WSRD), comprising the following parts:
a. a Web Service routing part, (WSRP) adapted to invoke a Web-Service corresponding to said metadata, based on said meta-data included in said data-stream; and
b. a web service response reception part (WSRP), adapted to receive a response from said web service invoked based on said meta-data included in said data-stream.

6. Application Generating device (AGD), for use in an interactive TV system for forwarding a data (broadcast stream) from a head-end device (HE) to a client device (CD), said data -stream including metadata related to content of said data-stream, said head end device and said client-device being coupled over a communications network (CN), said Application Generating device (AGD), comprising the following parts:
a. a response reception part (RRP), adapted to receive a response generated by a web service; and
b. an application generating part (AGP), adapted to generate, based on said response of said web-service, an application for interacting with a user via said client device.

7. Application Generating device (AGD), according to claim 6 where said application device further comprises a presenting part (PP), adapted to forward said application for interacting with a user to said client device.

8. Assembling device (AD), for use in an interactive TV system for forwarding a data stream from a head-end device (HE) to a client device (CD), said data -stream) including metadata related to content of said data-stream, said head end device and said client-device being coupled over a communications network (CN), said .Assembling device (AD) comprising the following parts:
a. an application reception part (ARP), adapted to receive an application for interacting with a user via said client device;
b. an application inserting part (AIP), adapted to insert said application in said data forwarded by said head end device (HE) to said client device (CD).
